# EUROPÄISCHE PATENTSCHRIFT

(11) **EP 3 800 028 B1**
(45) Veröffentlichungstag und Bekanntmachung des Hinweises auf die Patenterteilung: **04.10.2023**
(21) Anmeldenummer: 20211286.8
(22) Anmeldetag: 19.02.2015
(51) Int. Cl.: B29C 44/12, B29C 44/34

(54) **MEHRSCHICHTIGER FORMKÖRPER FÜR FAHRZEUGINNENAUSSTATTUNGEN SOWIE VERFAHREN ZUR HERSTELLUNG SOLCHER FORMKÖRPER**
MULTI-LAYERED SHAPED BODY FOR INTERNAL VEHICLE FITTINGS AND METHOD FOR PRODUCING SUCH SHAPED BODIES
CORPS MOULÉS MULTICOUCHES DESTINÉS AUX ÉQUIPEMENTS INTÉRIEURS DE VÉHICULES ET PROCÉDÉ DE FABRICATION DUDIT CORPS MOULÉ

(30) Priorität: 19.02.2014 DE 102014203013; 26.02.2014 DE 102014002564
(43) Veröffentlichungstag der Anmeldung: 07.04.2021
(62) Teilanmeldung aus: 15707306.5
(73) Patentinhaber: Shanghai Yanfeng Jinqiao Automotive Trim Systems Co., Ltd., Shanghai 201206 (CN)
(72) Erfinder: THIELHORN, Peter, 45468 Mühlheim a. d. Ruhr (DE); KLUSMEIER, Werner, 32312 Lübbecke (DE); BRÜCKNER, Hubert, 40699 Erkrath (DE)
(74) Vertreter: Meissner Bolte Partnerschaft mbB

(56) Entgegenhaltungen:
- EP-A2- 0 337 183
- DE-C1- 3 838 145
- US-A- 4 758 294
- US-A- 5 133 912
- US-A1- 2013 004 702

## Beschreibung

Die vorliegende Erfindung betrifft ein Verfahren zur Herstellung von mehrschichtigen Formkörpern gemäß dem unabhängigen Patentanspruch 1. Darüber hinaus bezieht sich die vorliegende Erfindung auf einen Formkörper, welcher durch das erfindungsgemäße Verfahren herstellbar ist.

Neben dem Design einer Fahrzeugkarosserie, welches zumeist als erstes in das Auge des Betrachters fällt, ist die Gestaltung des Fahrzeuginnenraumes ein wesentlicher Faktor der modernen Fahrzeugentwicklung. Hierbei wird nicht nur auf die Optik der einzelnen Interieur-Elemente Wert gelegt; vielmehr spielt auch die Haptik und das Zusammenspiel zwischen Material, Form und Farben der Innenausstattung eine entscheidende Rolle. Hochwertige Fahrzeuginnenräume überzeugen vor allem durch ihr Design und erstklassig verarbeitete Materialien. Dabei gehören bspw. Lederausstattungen längst nicht mehr zum Premiumsegment, sondern finden sich zunehmend auch in Fahrzeugen des mittleren Preissegments wieder. Insbesondere natürliches Leder, als natürlicher Werkstoff stellt sehr hohe Anforderungen an den Verarbeitungsablauf. Dabei treten immer wieder Probleme beim sogenannten Kaschieren von Kunststoffteilen mit Leder auf. So kommt es immer wieder zu Schwierigkeiten bei der Positionierung der Nähte sowie bei der Verbindung des Ledermaterials mit dem vorwiegend weichen Kunststoffuntergrund.

Um eine schnelle und einfache Verbindung eines Trägermaterials mit dem Bezugsmaterial (z.B. Ledermaterial) zu erreichen, ist es bekannt das Bezugsmaterial in einem Formwerkzeug mit einem Kunststoff zu hinterschäumen. Typische Probleme, die bei dieser Hinterschäumung von Bezugsmaterialien wie Leder regelmäßig zu einer hohen Ausschussquote führen, sind der Austritt von geschäumten Kunststoffmaterial durch die Nähte des Bezugsmaterials, der orangen Hauteffekt der Nahtstelle, die Ausrichtung der Nähte gegenüber dem Kunststoffuntergrund sowie Haftungsprobleme. Darüber hinaus ist es bekannt, dass die verschiedenen Komponenten der mehrschichtigen Formkörper unter verschiedenen klimatischen Bedingungen nicht dimensionsstabil sind.

Das oben bereits angedeutete, konventionelle Hinterschäumen ist ein Verfahren mit besonders hohem Arbeitsaufwand, da eine Vielzahl von Prozessschritten benötigt wird. Unter anderem müssen die Nähte des Bezugsmaterials, vor dem Hinterschäumen, so abgedichtet werden, dass der geschäumte Kunststoff, welcher auf die Rückseite des Bezugsmaterials aufgetragen wird, nicht durch die Nähte dringt, wenn das Schäumwerkzeug geschlossen und unter Druck gesetzt wird. Sollte dies nicht der Fall sein, kann das Bezugsmaterial geschädigt werden bzw. dessen Haptik und Erscheinungsbild verschlechtert werden.

Zum Abdichten der Nähte ist es aus dem Stand der Technik beispielsweise bekannt, diese durch ein Klebeband, welches auf der Rückseite des Beschichtungsmaterials angebracht wird, zu schützen. Es hat sich jedoch in der Praxis gezeigt, dass die Nähte des Beschichtungsmaterials durch ein Klebeband oftmals nicht genügend abgedichtet werden können. Als Abhilfemaßnahme wird in der EP 0 337 183 B1 beispielsweise eine Sperrschicht aus Polyurethan vorgeschlagen, welche an der Rückseite des Bezugsmaterials angebracht wird. Die DE 38 38 145 C1 betrifft ein Verfahren zur Herstellung von schaumstoffgepolsterten Sitzen. Die US 5 133 912 A umfasst wiederum ein Verfahren zur Integration von ersten und zweiten Schichten in eine zusammenhängende Deckschicht.

Bei der aus dem Stand der Technik bekannten Lösung hat es sich als problematisch herausgestellt, dass die Naht des Bezugsmaterials nicht ausreichend fixiert ist und beim Hinterschäumen verrutscht. Darüber hinaus wurde festgestellt, dass selbst die aus Polyurethan bestehende Sperrschicht zu einer Veränderung der Eigenschaften des Bezugsmaterials führen kann.

Auf Grundlage der oben genannten Problemstellung liegt der vorliegenden Erfindung die Aufgabe zugrunde, ein Verfahren zur Herstellung von mehrschichtigen Formkörpern anzugeben, bei welchem das Bezugsmaterial im Schäumwerkzeug derart stabilisiert wird, dass ein Verrutschen während des Hinterschäumens nicht möglich ist. Zusätzlich soll durch die Erfindung eine prozesssichere Abdichtung der Rückseite des Bezugsmaterials gewährleistet werden.

Erfindungsgemäß wird diese Aufgabenstellung durch das Verfahren gemäß dem unabhängigen Patentanspruch 1 gelöst.

Demgemäß betrifft die vorliegende Erfindung ein Verfahren zur Herstellung von mehrschichtigen Formkörpern, bei welchen auf die Rückseite eines Bezugsmaterials ein geschäumter Kunststoff aufgebracht wird. Dabei ist unter der "Rückseite" (auch Fleischseite genannt) die Seite des Bezugsmaterials zu verstehen, welche für den Betrachter des Formkörpers nicht sichtbar ist.

Das erfindungsgemäße Verfahren zeichnet sich insbesondere dadurch aus, dass das Bezugsmaterial bereits vor dem Einbringen in das Schäumwerkzeug mit einer selbsttragenden Sperrschicht verbunden wird, wodurch ein Vorverbund zwischen dem Bezugsmaterial und der selbsttragenden Sperrschicht entsteht. Somit wird bereits in diesem Verfahrensstadium ein Verrutschen des Bezugsmaterials wirkungsvoll verhindert.

Die Vorteile des erfindungsgemäßen Verfahrens liegen auf der Hand: So wird durch die Anbringung des Bezugsmaterials auf einer selbsttragenden Sperrschicht erreicht, dass die unterschiedlichen Bereiche des Bezugsmaterials, bereits vor dem Einbringen in das Schäumwerkzeug, präzise positioniert werden können und ein Verrutschen des Bezugsmaterials wirkungsvoll verhindert wird. Gleichzeitig ergibt sich eine perfekte Abdeckung der Rückseite des Bezugsmaterials durch die selbsttragende Sperrschicht, weshalb Beschädigungen des Bezugsmaterials beim Hinterschäumen praktisch ausgeschlossen werden können.

Erfindungsgemäß ist vorgesehen, dass die Sperrschicht in einer Form hergestellt wird, welche im Wesentlichen der Außenkontur des zu fertigenden Formkörpers entspricht. Speziell bei dreidimensional aufwendig herzustellenden Formkörpern - wie Instrumententafeln - kann es bei der Positionierung des Bezugsmaterials in Eckbereichen des Formkörpers zu unerwünschten Materialaufwerfungen bzw. Materialüberlagerungen kommen. Durch das Vorformen der selbsttragenden Sperrschicht lässt sich das Bezugsmaterial bereits vor dem Einbringen in das Schäumwerkzeug genau an der Außenkontur des späteren Formkörpers fixieren. Mit anderen Worten stellt die selbsttragende Sperrschicht gemäß dieser Ausführungsform, bereits vor dem Einbringen in das Schäumwerkzeug, ein Abbild des zu fertigen Formkörpers dar, auf welchem das Bezugsmaterial mit höchster Präzision positioniert und fixiert werden kann. Alternativ dazu, ist es jedoch auch denkbar, dass die Sperrschicht zunächst in einer ebenen Struktur ausgebildet ist, auf welcher das Bezugsmaterial zumindest mit Teilbereichen seiner Rückseite fixiert wird, wobei erst in einem zweiten Schritt eine Verformung des Vorverbunds aus Sperrschicht und Bezugsmaterial erfolgt, welche dazu führt, dass der Vorverbund genau auf die Außenkontur des späteren Formkörpers angepasst ist.

Vorteilhafte Weiterbildungen des erfindungsgemäßen Verfahrens sind in den abhängigen Patentansprüchen angegeben.

Gemäß einer weiteren Realisierung des erfindungsgemäßen Verfahrens wird die Sperrschicht aus einer thermisch tiefgezogenen Folie gebildet. Hierdurch werden selbsttragende Sperrschichten hergestellt, welche eine besonders hohe Steifigkeit bei relativ geringem Gewicht aufweisen. Dabei können unterschiedliche Dicken und Dichten der tiefgezogenen Folie verwendet werden.

Gemäß des erfindungsgemäßen Verfahrens ist die Sperrschicht aus Polyolefin, Polypropylen, Polyester oder Polystyrol gebildet. Insbesondere ist es vorteilhaft, Polystyrolfolien zu verwenden, wenn die Haptik, insbesondere die Eindruckhärte der Oberfläche des Formkörpers, relativ hart sein soll. Durch die Verwendung von Polystyrol wird ferner eine besonders hohe Dimensionsstabilität der selbsttragenden Sperrschicht erreicht. Zur Produktion weicher Formkörper ist es von Vorteil, Sperrschichten aus Polyolefin-Tiefziehfolien zu verwenden. Beispielsweise eignet sich hierzu Polypropylen, Polyethylen bzw.

Polyethylenterephthalat. Aufgrund der hohen Temperaturbeständigkeit sowie des guten Preis-Leistungs-Verhältnisses ist es insbesondere bevorzugt die selbsttragende Sperrschicht aus einer geschäumten Polypropylen-Tiefziehfolie herzustellen.

Gemäß einem weiteren Aspekt des erfindungsgemäßen Verfahrens, kann die Sperrschicht aus einer thermisch tiefgezogenen Folie gebildet sein, wobei die Sperrschicht selbstklebend ausgebildet wird. Mit anderen Worten ist es nicht nötig eine separate Klebeschicht, in einem weiteren Verfahrensschritt, auf die Sperrschicht aufzubringen, um das Bezugsmaterial auf der Sperrschicht zu fixieren. Die Sperrschicht ist dabei vorzugsweise derart selbstklebend ausgebildet, dass das Bezugsmaterial direkt während eines Tiefziehprozesses mit der Sperrschicht verbunden werden kann. Das heißt, das Bezugsmaterial kann mit der Sperrschicht verbunden werden, während diese gleichzeitig durch einen Tiefziehprozess in ihre gewünschte dreidimensionale Form (z.B. Außenkontur des zu fertigenden Formkörpers) gebracht wird. Hierzu ist es denkbar, dass die Sperrschicht aus einem thermisch aktivierbaren Thermoplast besteht, welcher durch den Wärmeeintrag während dem Tiefziehen seine Haftwirkung erzielt. Dies begünstigt insbesondere das Aufbringen und die Positionierung des Bezugsmaterials auf der Sperrschicht, vor dem Tiefziehen, da die Sperrschicht zu diesem Zeitpunkt noch keine Hafteigenschaften aufweist. Erst wenn ein Wärmeeintrag durch den Tiefziehprozess entsteht, erzielt die Sperrschicht ihre Haftwirkung und verbindet sich folglich mit dem Bezugsmaterial zu einem Vorverbund. Selbstverständlich ist es auch denkbar, die Sperrschicht derart selbstklebend auszubilden, dass diese bereits vor dem Tiefziehprozess eine Haftwirkung aufweist. Dementsprechend würde bereits vor dem Tiefziehen ein Vorverbund zwischen der Sperrschicht und dem Bezugsmaterial erreicht.

Alternativ zu der oben genannten Ausführungsform kann die Fixierung zwischen der Sperrschicht und dem Bezugsmaterial auch durch mindestens eine separate Klebeschicht erzeugt werden.

Die Klebeschicht wird dazu insbesondere auf die selbsttragende Sperrschicht aufgebracht. Dabei kann die Klebeschicht entweder unmittelbar vor dem Erzeugen des Vorverbunds auf die Sperrschicht aufgetragen werden oder sich bereits von Anfang an auf der Oberfläche der selbsttragenden Sperrschicht befinden. Die Klebeschicht ist zumindest bereichsweise auf die selbsttragende Sperrschicht aufgebracht. Im Einzelnen ist es dabei vorgesehen, dass die Klebeschicht zumindest an den Teilen der selbsttragenden Sperrschicht vorgesehen ist, an denen die Nähte des Bezugsmaterials angebracht werden sollen. Selbstverständlich ist es alternativ auch denkbar, die gesamte selbsttragende Sperrschicht vollflächig mit einer Klebeschicht zu versehen.

Die oben bereits erwähnte Klebeschicht ist vorzugsweise derart ausgebildet, dass zunächst nur eine leichte Haftverbindung zwischen der selbsttragenden Sperrschicht und dem Bezugsmaterial entsteht. Insbesondere ist es dabei von Vorteil, die Haftverbindung so auszubilden, dass das Bezugsmaterial - im Falle einer fehlerhaften Anbringung - solange von der selbsttragenden Sperrschicht lösbar ist, bis der Vorverbund im Schäumwerkzeug hinterschäumt wird.

Dementsprechend kann es sich bei der Klebeschicht bspw. um eine über eine vorbestimmbare Aktivierungstemperatur aktivierbare Klebeschicht handeln. Die Aktivierungstemperatur der Klebeschicht liegt selbstverständlich unterhalb der Schmelztemperatur der selbsttragenden Sperrschicht.

Auch ist die Aktivierungstemperatur in einem Bereich, welcher einer Reaktionstemperatur des geschäumten Kunststoffs entspricht. Beispielsweise kann die Aktivierungstemperatur demnach in einem Bereich zwischen 40° C und 60° C, bevorzugt ca. 50° C, liegen, was dem Temperaturbereich entspricht, der beim Einschäumen des geschäumten Kunststoffs in das Schäumwerkzeug erreicht wird. Durch die Verarbeitungstemperatur des eingegebenen, geschäumten Kunststoffs verflüssigt sich die aufgebrachte Klebeschicht, wodurch eine endgültige Verbindung zwischen der selbsttragenden Sperrschicht und dem Bezugsmaterial erzielt wird. Gleichzeitig wird durch die Volumenvergrößerung des geschäumten Kunststoffs und den dadurch entstehenden Schaumdruck innerhalb der Schäumkammer des Schäumwerkzeugs eine entsprechende Kraft auf die Sperrschicht ausgeübt, sodass die selbsttragende Sperrschicht selbstständig auf die Rückseite des Bezugsmaterials aufgedrückt wird.

Wie oben bereits angedeutet, kann das Bezugsmaterial mindestens eine Verbindungs- und/oder Ziernaht aufweisen. Dies ist insbesondere häufig dann der Fall, wenn Ledermaterialien als Bezugsmaterial verwendet werden. In diesem Fall hat es sich als besonders vorteilhaft herausgestellt, wenn die Fixierung des Bezugsmaterials an der Sperrschicht ausschließlich entlang des Verbindungs- bzw. Ziernaht erfolgt. Dementsprechend wird der Fixierungsaufwand minimiert und Klebematerialien eingespart. Schließlich lässt sich das Bezugsmaterial durch die ausschließliche Fixierung entlang der Verbindungs- bzw. Ziernähte einfacher und schneller an der selbsttragenden Sperrschicht befestigen.

Als Bezugsmaterial können allgemein bekannte Lederarten verwendet werden, die gegerbt, gefärbt, beschichtet, imprägniert oder anderweitig nach üblichen Verfahren behandelt sein können. Insbesondere kommen übliche Rinder-, Schaf-, Ziegen-, Schweine-, Straußen- oder Krokodilleder, bevorzugt jedoch Rinderleder in Betracht. Das Leder kann insbesondere für den Bezug von Formkörpern wie Sitzpolster, Rückenlehnen, Armlehnen, Türseitenverkleidungen oder Instrumententafeln, z.B. im Automobilbau, verwendet werden. Es können metallsalzgegerbte (z.B. Chrom, Aluminium) wie auch metallsalzfreie Leder eingesetzt werden.

Gemäß eines nicht beanspruchten Beispiels der vorliegenden Offenbarung kann die Positionierung der Verbindungs- bzw. Ziernaht auf der Sperrschicht kann beispielsweise mit Hilfe mindestens eines Nahtschwerts und/oder mit Hilfe von optischen Sensoren erfolgen.

Die vorliegende Offenbarung betrifft ferner ein nicht zur beanspruchten Erfindung gehörendes Verfahren zum Kaschieren eines Bauteils mit einer Verkleidung, wobei in einem ersten Verfahrensschritt eine Folie verformt wird, wobei in einem zweiten Verfahrensschritt die Verkleidung mit der geformten Folie zumindest partiell stoffschlüssig verbunden wird, wobei in einem dritten Verfahrensschritt die mit der Verkleidung verbundene Folie hinterschäumt wird.Durch die stoffschlüssige Verbindung der Folie mit der Verkleidung die Folie derart fixiert, dass diese an einem Verrutschen gehindert wird. Beim anschließenden Hinterschäumen sorgt die Folie dann für ein Abdichten und verhindert das Austreten von Schaum, insbesondere an den Nähten der Verkleidung. Dabei ist es sogar denkbar, dass die Folie derart mit der Verkleidung verbunden ist, dass ein für die Hinterschäumung vorgesehener Schaum mit einem derart hohen Druck eingeführt werden kann, dass auf eine anschließende Verpressung von Verkleidung und geschäumtem Grundkörper verzichtet werden kann.

In einer Weiterbildung des nicht beanspruchten Verfahrens ist es vorgesehen, dass die mit der Verkleidung verbundene Folie im dritten Verfahrensschritt in einem Schäumwerkzeug angeordnet wird. Insbesondere ist es denkbar, dass das Verfahren zum Kaschieren des Bauteils in einen industriellen Fertigungsprozess, der beispielsweise Teil einer Fertigungsstraße ist, integriert wird. Dank der Fixierung der Folie an der Verkleidung muss dann bei der maschinellen Fertigung und Handhabe des kaschierten Bauteils nicht auf ein mögliches Verrutschen der Folie Acht gegeben werden.

In einer Weiterbildung des nicht beanspruchten Verfahrens ist es vorgesehen, dass die geformte Folie im zweiten Verfahrensschritt zumindest teilweise entlang einer Naht der Verkleidung oder in deren unmittelbarer Umgebung mit der Verkleidung verbunden wird. Beispielsweise genügt es, die stoffschlüssige Verbindung von Folie und Verkleidung auf für das Hinterschäumen relevante Bereiche zu begrenzen. Dadurch lässt sich auf vorteilhafte Weise der Aufwand beim stoffschlüssigen Verbinden auf das Nötigste reduzieren, ohne die Funktionalität der fixierten Folie einzuschränken. Außerdem wird der Folie beim Hinterschäumen ein wenig Spiel gelassen, wodurch bei der Formung der Folie im ersten Verfahrensschritt größere Fertigungstoleranzen zulässig sind.

In einer Weiterbildung des nicht beanspruchten Verfahrens ist es vorgesehen, dass die Folie im ersten Verfahrensschritt erwärmt und tiefgezogen wird, wobei die Folie im ersten Verfahrensschritt an die Form des Bauteils angepasst wird. Durch die an das Bauteil angepasste Verformung lässt sich in vorteilhafter Weise sicherstellen, dass die Folie beim Hinterschäumen keinen eigenen ungewollten Beitrag zur Formgebung des kaschierten Bauteils beisteuert. Es ist weiterhin denkbar, dass die Folie einen Schutz zwischen Schaum und Verkleidung realisiert. Ein solcher Schutz ist möglicherweise von Vorteil, wenn die Verkleidung zu einem späteren Zeitpunkt, beispielsweise zu deren Recycling, wieder von dem geschäumten Grundkörper entfernt werden soll.

In einer Weiterbildung des nicht beanspruchten Verfahrens ist es vorgesehen, dass zeitlich vor dem zweiten Verfahrensschritt die Verkleidung auf der Folie unter Verwendung von optischen Hilfsmitteln oder Schwertern positioniert und/oder mindestens entlang einer Naht der Verkleidung fixiert wird. Damit lässt sich die geformte Folie möglichst positionsgenau zu der Verkleidung, insbesondere zu deren Naht, anordnen, wodurch in vorteilhafter Weise die Prozesssicherheit weiter verbessert werden kann.

In einer weiteren Weiterbildung des nicht beanspruchten Verfahrens ist es vorgesehen, dass im zweiten Verfahrensschritt die Verkleidung und die Folie
- mittels eines Klebemittels miteinander verklebt und/oder
- mittels einer Verschmelzung miteinander verbunden werden. Beim Verschmelzen kann in vorteilhafter Weise auf zusätzliche Klebemittel verzichtet werden. Vorzugsweise werden unmittelbar vor dem zweiten Verfahrensschritt die besagten Klebemittel flächig oder punktuell auf die Folie und/oder die Verkleidung, vorzugsweise einseitig, aufgetragen.

In einer weiteren Weiterbildung des nicht beanspruchten Verfahrens ist es vorgesehen, dass im dritten Verfahrensschritt die Folie mit PUR-Weichschaum hinterschäumt wird.

In einem weiteren Beispiel des nicht beanspruchten Verfahrens ist es vorgesehen, dass eine Folie mit einer Schaumfolie und/oder einer harten Folie verwendet wird. In vorteilhafte Weise lässt sich über die Wahl der Folie die Oberflächenbeschaffenheit des kaschierten Bauteils mitbestimmen. Beispielsweise sorgt eine Schaumfolie für eine vergleichsweise weiche Oberflächenbeschaffenheit des kaschierten Bauteils gegenüber einer harten Oberflächenbeschaffenheit, wenn unterhalb der Verkleidung eine kompakte harte Folie angeordnet ist. Es ist dabei auch denkbar, dass eine Folie sich aus eine Mehrzahl unterschiedlicher Teilfolien zusammensetzt, über deren Beschaffenheit die Oberfläche des kaschierten Bauteils variiert wird. Dadurch lassen sich die kaschierten Bauteile auch an ausgefallenere Wünsche anpassen.

In einer weiteren Weiterbildung des nicht beanspruchten Verfahrens ist es vorgesehen, dass im dritten Verfahrensschritt das Klebemittel durch ein erwärmtes Schäumwerkzeug und/oder eine Reaktionstemperatur des PUR-Weichschaums aktiviert und zur Reaktion gebracht wird. Damit lässt sich eine stoffschlüssige Verbindung zeitgleich zum Hinterschäumen realisieren, wodurch in vorteilhafter Weise Zeit gespart wird.

Ein weiterer, nicht beanspruchter Gegenstand der vorliegenden Offenbarung ist ein Werkzeug zum Kaschieren gemäß einem nicht beanspruchten Verfahren, wie es oben beschrieben wurde. Ein solches Werkzeug lässt sich in vorteilhafter Weise in einer Fertigungsstraße zum Herstellen von Interieurbauteilen für ein Kraftfahrzeug integrieren. Dabei kann das Werkzeug die Zuverlässigkeit beim Kaschieren der Bauteile in vorteilhafter Weise erhöhen.

Ein weiterer, nicht beanspruchter Gegenstand der vorliegenden Offenbarung ist ein Bauteil, vorzugsweise ein Interieurbauteil für ein Kraftfahrzeug, hergestellt mit dem erfindungsgemäß nicht beanspruchten Verfahren, wie es oben beschrieben wurde.

Das erfindungsgemäße Verfahren zur Herstellung mehrschichtiger Formkörper wird im Folgenden anhand der in den Figuren dargestellten exemplarischen Ausführungsformen näher dargestellt.

Dabei zeigen:
- Figuren 1a bis 1e:: schematische Darstellung des erfindungsgemäßen Verfahrens gemäß einer ersten Ausführungsform;
- Figuren 2a bis 2e:: schematische Darstellung des erfindungsgemäßen Verfahrens gemäß einer zweiten Ausführungsform; und
- Figuren 3a bis 3c:: schematische Darstellung des erfindungsgemäßen Verfahrens gemäß einer dritten Ausführungsform.

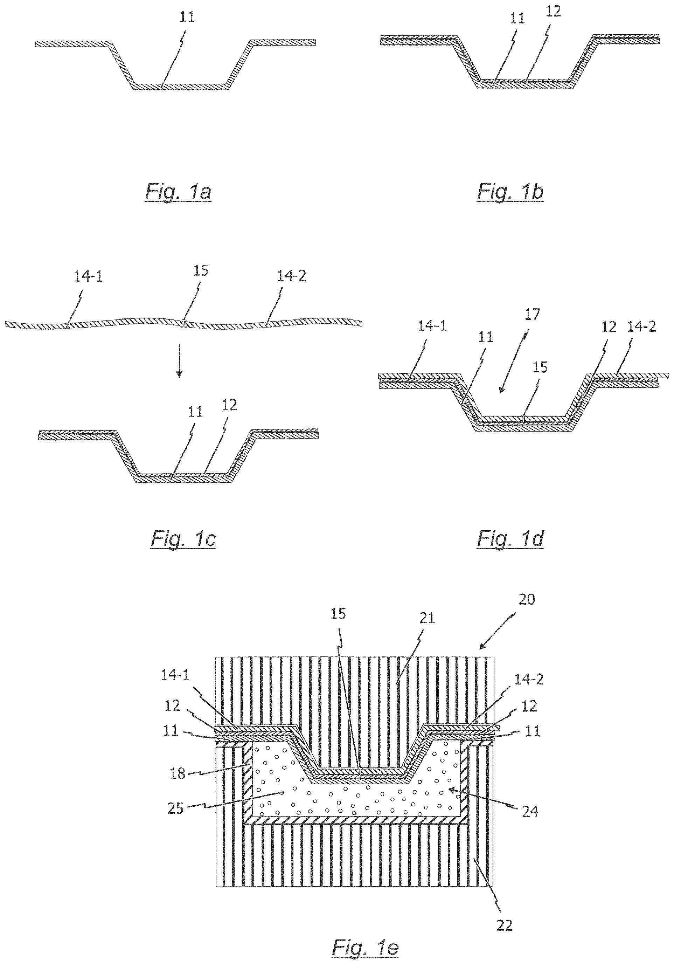

Den Figuren 1a bis 1e ist eine erste Ausführungsform des erfindungsgemäßen Verfahrens zum Herstellen von mehrschichtigen Formkörpern zu entnehmen. Wie es insbesondere der Fig. 1a zu entnehmen ist, wird gemäß dieser Ausführungsform zunächst eine selbsttragende Sperrschicht 11 hergestellt, welche für geschäumte Kunststoffe - wie beispielsweise PUR-Schaum - undurchdringbar ist. Hierzu kann die Sperrschicht 11 beispielsweise aus einer geschäumten Folie aus Polyolefin oder Polystyrol gebildet sein. Wie angedeutet, weist die selbsttragende Sperrschicht 11 eine spezielle Form auf, welche der Außenkontur des herzustellenden Formkörpers entspricht, wie dies später näher erläutert werden wird. Beispielsweise kann es sich dabei um die Außenkontur eines Instrumententrägers, einer Türverkleidung, einer Mittelkonsole, oder ähnlichen Innenausstattungsteilen von Fahrzeugen handeln. Mit anderen Worten wird die selbsttragende Sperrschicht 11 vorgeformt, bevor diese in das Schäumwerkzeug eingebracht wird.

Das Vorformen erfolgt beispielsweise durch Tiefziehen der oben genannten Folie aus Polyolefin oder Polystyrol. Beispielhaft wurde die hier dargestellte Sperrschicht 11 mit einer Vertiefung ausgebildet, welche im Querschnitt dargestellt ist. Selbstverständlich ist die dargestellte Form der Sperrschicht jedoch nicht als einschränkend anzusehen.

In einem zweiten, in Fig. 1b dargestellten Schritt wird eine Klebeschicht 12 auf die Oberfläche der selbsttragenden Sperrschicht 11 aufgebracht. Die Klebeschicht 12 wird dabei insbesondere auf die spätere Außenseite der Sperrschicht 11, welche mit dem Bezugsmaterial verbunden wird, aufgebracht. Selbstverständlich ist es auch möglich, dass die geschäumte Folie zum Herstellen der Sperrschicht 11 bereits bei der Herstellung eine Klebeschicht 12 aufweist und somit direkt nach dem Verformen (bspw. durch Tiefziehen) mit dem Bezugsmaterial 14-1, 14-2 verbunden werden kann, wie dies im nächsten Schritt gemäß Fig. 1c erläutert werden wird.

Der Fig. 1c ist ein schematischer Querschnitt durch ein Bezugsmaterial 14-1, 14-2 zu entnehmen, welches beispielsweise aus Leder bzw. Kunstleder gefertigt ist. Das Bezugsmaterial 14-1, 14-2 besteht gemäß der dargestellten Ausführungsform aus zwei Einzelteilen 14-1 und 14-2, welche über eine Verbindungsnaht 15 aneinander befestigt sind. Selbstverständlich ist die Erfindung nicht auf die in den Figuren dargestellte Anzahl von Verbindungsnähten beschränkt. Vielmehr ist es durchaus denkbar, dass das Bezugsmaterial 14-1, 14-2 keine bzw. eine Vielzahl von Verbindungs- bzw. Ziernähten aufweist.

Das oben beschriebene Bezugsmaterial 14-1, 14-2 wird, wie durch den Pfeil angedeutet, mit seiner Rückseite auf die selbsttragende Sperrschicht 11 aufgebracht und über die Klebeschicht 12 mit dieser fixiert. Dabei ist es vorgesehen, dass das Bezugsmaterial 14-1, 14-2 entlang mindestens eines Teilbereichs seiner Rückseite derart mit der selbsttragenden Sperrschicht 11 verklebt wird, dass ein Vorverbund 17 zwischen der Sperrschicht 11 und dem Bezugsmaterial 14-1, 14-2 entsteht, welcher beispielsweise in der Fig. 1d dargestellt ist. Somit befindet sich das Bezugsmaterial 14-1, 14-2 bereits vor dem Einbringen in das Schäumwerkzeug (Fig. 1e) in einer Form, welcher der späteren Außenkontur des herzustellenden, mehrschichtigen Formkörpers entspricht.

Wie es oben bereits erwähnt wurde, kann es sich bei der Klebeschicht 12 insbesondere um einen thermisch aktivierbaren Klebstoff, wie beispielsweise einen Thermoharz handeln, welcher zunächst nur eine leichte Verbindung zwischen der selbsttragenden Sperrschicht 11 und dem Bezugsmaterial 14-1, 14-2 herstellt. Demnach wird die endgültige Verbindung zwischen der Sperrschicht 11 und dem Bezugsmaterial 14-1, 14-2 erst beim Hinterschäumen innerhalb des Schäumwerkzeugs erreicht, da hierbei Temperaturen auftreten, welche der Verarbeitungstemperatur der Klebeschicht 12 entsprechen.

Der Verfahrensschritt zum Hinterschäumen des Vorverbunds 17 kann der Fig. 1e dem Prinzip nach entnommen werden. Aus dieser Darstellung ist zu entnehmen, dass der Vorverbund 17 aus Sperrschicht 11 und Bezugsmaterial 14-1, 14-2 in ein Schäumwerkzeug 20 eingelegt wird. Das Schäumwerkzeug 20 weist der gemäß der dargestellten Ausführungsform einen oberen Werkzeugteil 21 sowie einen unteren Werkzeugteil 22 auf, zwischen welchen der Vorverbund 17 eingespannt wird. Zwischen der Sperrschicht 11 und dem unteren Werkzeugteil 21 ist ferner ein Trägerelement 18 angeordnet, welches durch das hinterschäumte Bezugsmaterial kaschiert werden soll. Die beiden Teile 21, 22 des Schäumwerkzeugs 20 bilden auf der Rückseite des Vorverbunds 17, d. h. auf der Rückseite der Sperrschicht 11 eine Schäumkammer 24 aus, an deren Unterseite das Trägerelement 18 angeordnet ist. Die Schäumkammer 24 kann beispielsweise über einen nicht dargestellten, lateralen Einfüllkanal mit geschäumtem Kunststoff 25, wie beispielsweise PUR-Schaum, befüllt werden. Im Einzelnen kann es sich bei dem geschäumten Kunststoff um einen durch COz betriebenen Polyurethan-Formschaum handeln, welcher beim Einschäumen in die Schäumkammer 24 einen Schaumdruck verursacht, der die selbsttragende Sperrschicht 11 über das Bezugsmaterial 14-1, 14-2 auf das obere Teil 21 des Schäumwerkzeugs 20 drückt. Gleichzeitig erzielt der PUR-Schaum beim Einschäumen in die Schäumkammer 24 eine Temperatur, welche in etwa der Aktivierungstemperatur der Klebeschicht 12 entspricht, sodass durch den Druck und die Temperatur des geschäumten Kunststoffs 25 eine endgültige Verbindung zwischen der Sperrschicht 11 und dem Bezugsmaterial 14-1, 14-2 entsteht.

Da die Sperrschicht 11 für den geschäumten Kunststoff 25 undurchdringbar ist, wird wirkungsvoll verhindert, dass der geschäumte Kunststoff zu tief in die Poren des Bezugsmaterials 14-1, 14-2 eindringt bzw. durch die Verbindungsnaht 15 diffundiert. Nachdem der geschäumte Kunststoff 25 abgekühlt und ausgehärtet ist, verbindet dieser den Vorverbund 17 aus dem Bezugsmaterial 14-1, 14-2 und der Sperrschicht 11 dauerhaft mit dem Trägerelement 18, sodass eine mehrschichtiger Formkörper (z.B. ein Instrumententräger) entsteht.

Wie oben bereits angedeutet, wird durch den Vorverbund 17, welcher bereits vor dem Einbringen in das Schäumwerkzeug 20 erzeugt wird, erreicht, dass das Bezugsmaterial 14-1, 14-2 beim Hinterschäumen nicht verrutschen kann, wodurch unerwünschte Unebenheiten auf der Oberfläche des mehrschichtigen Formkörpers verhindert werden.

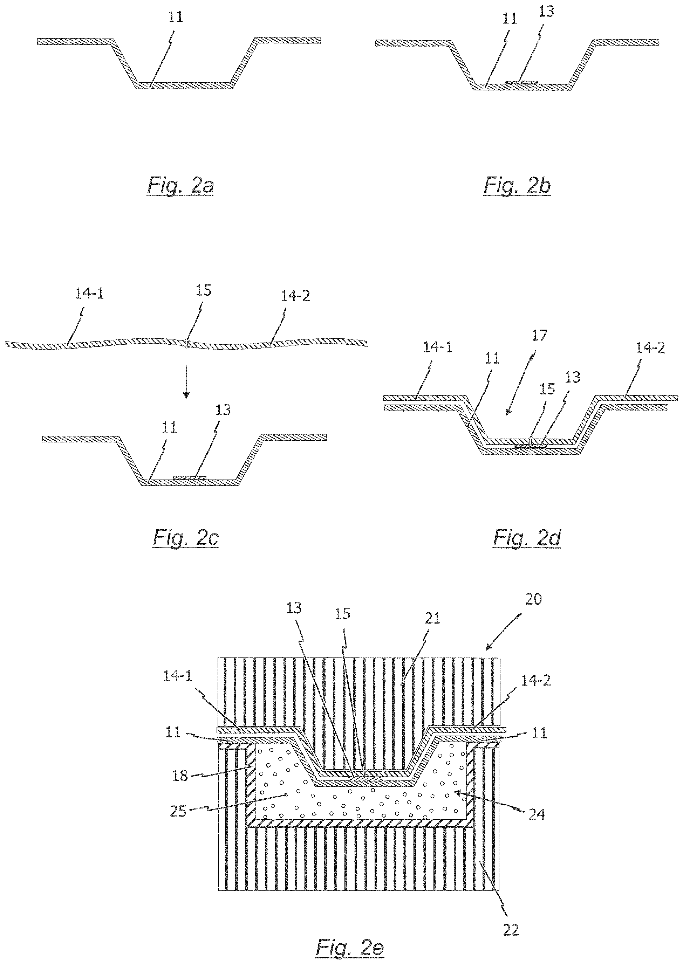

Eine zweite Ausführungsform des erfindungsgemäßen Verfahrens zum Herstellen von mehrschichtigen Formkörpern ist den Figuren 2a bis 2e zu entnehmen. Das Verfahren gemäß der zweiten Ausführungsform entspricht im Wesentlichen dem Verfahren gemäß der ersten Ausführungsform, wobei das Bezugsmaterial 14-1, 14-2 in diesem Fall jedoch ausschließlich entlang seiner Verbindungsnaht 15 mit der selbsttragenden Sperrschicht 11 verbunden wird. Dementsprechend befindet sich in den Darstellungen gemäß den Figuren 2b bis 2e nur an denjenigen Teilbereichen der Sperrschicht 11 eine Klebeschicht 13, an welchen die Nahtbereiche 15 des Bezugsmaterials 14-1, 14-2 fixiert werden sollen. Zwar ist in den Darstellungen gemäß Fig. 2a bis 2e lediglich eine Naht 15 zu entnehmen, jedoch ist es in der Praxis selbstverständlich üblich, eine Vielzahl verschiedener Verbindungs- bzw. Ziernähte vorzusehen, welche gemäß der zweiten Ausführungsform jeweils über eine Klebeschicht 13 mit der Sperrschicht 11 verbunden sind.

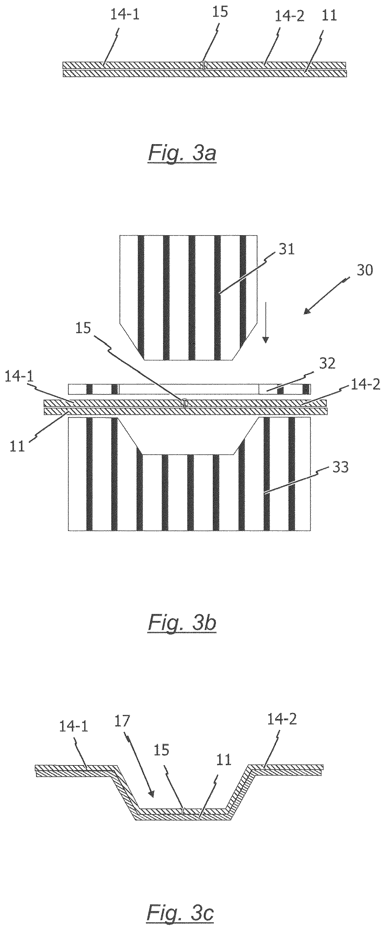

In den Figuren 3a bis 3c ist eine dritte Ausführungsform des erfindungsgemäßen Verfahrens dargestellt. Diese Ausführungsvariante unterscheidet sich von den ersten beiden Ausführungsformen insbesondere dadurch, dass die selbsttragende Sperrschicht selbstklebend ausgebildet ist. Dementsprechend entfällt der in den Figuren 1b bzw. 2b dargestellte Schritt zum Aufbringen einer separaten Klebeschicht 12 bzw. 13 auf die Oberfläche der Sperrschicht 11.

Die Sperrschicht 11 gemäß der dritten Ausführungsform ist vorzugsweise derart selbstklebend ausgebildet, dass das Bezugsmaterial 14-1, 14-2 direkt während eines Tiefziehprozesses mit der Sperrschicht 11 verbunden werden kann. Ein derartiger Tiefziehprozess, welcher insbesondere auch als Thermoformen bekannt ist, ist in der Fig. 3b schematisch dargestellt. Demnach wird Bezugsmaterial 14-1, 14-2 zunächst auf der Oberfläche der Sperrschicht 11 positioniert und Mittels einer Thermoformwerkzeugs 30 mit der selbstklebenden Sperrschicht 11 verbunden. Die Sperrschicht 11 ist zu diesem Zweck insbesondere aus einem selbstklebenden thermoplastischen Kunststoff, wie bspw. Polypropylen, ausgebildet. Innerhalb des Thermoformwerkzeugs 30 werden die Sperrschicht 11 und das Bezugsmaterial 14-1, 14-2 zwischen einem federgespannten Spannelement 32 und einem Unterteil 33 eingespannt. Sodann wird zumindest die Sperrschicht 11 soweit erhitzt, bis diese ihre Haftwirkung entwickelt. In einem weiteren Schritt werden die Sperrschicht 11 und das Bezugsmaterial 14-1, 14-2 durch ein Stempelelement 31 in eine Ausbuchtung des Unterteils 33 gepresst, wobei einerseits die oben erwähnte Außenkontur der Sperrschicht 11 geformt wird und gleichzeitig eine feste Verbindung zwischen der Sperrschicht 11 und dem Bezugsmaterial 14-1, 14-2 entsteht.

Gemäß der dritten Ausführungsform, entsteht eine Vorverbund 17 aus der Sperrschicht 11 und dem Bezugselement 14-1, 14-2, wie dieses schematisch aus der Fig. 3c zu erkennen ist. Der so erhaltene Vorverbund 17 wird sodann, äquivalent zu den Figuren 1e und 2e, in ein Schäumwerkzeug eingebracht und zu einem mehrschichtigen Formkörper verbunden.

### Bezugszeichenliste

- 11: selbsttragende Sperrschicht
- 12: Klebeschicht
- 13: Klebeschicht
- 14-1, 14-2: Bezugsmaterial
- 15: Naht
- 17: Vorverbund
- 20: Schäumwerkzeug
- 21: Oberteil
- 22: Unterteil
- 24: Schäumkammer
- 25: geschäumter Kunststoff
- 26: Füllkanal

## Patentansprüche

1. Verfahren zur Herstellung von mehrschichtigen Formkörpern, insbesondere von Innenausstattungsteilen für Fahrzeuge, wobei das Verfahren die folgenden Schritte aufweist:
• Herstellen einer selbsttragenden Sperrschicht (11), welche für den geschäumten Kunststoff (25) undurchdringbar ist;
• Aufbringen und Fixieren eines Bezugsmaterials mit zumindest einem Teilbereich der Rückseite auf der selbsttragenden Sperrschicht (11) derart, dass ein Vorverbund (17) aus der Sperrschicht (11) und dem Bezugsmaterial (14-1, 14-2) entsteht;
• Einbringen des Vorverbunds (17) aus Sperrschicht (11) und Bezugsmaterial (14-1, 14-2) in ein Schäumwerkzeug (20) derart, dass die Sperrschicht (11) zwischen dem Bezugsmaterial (14-1, 14-2) und einer Schäumkammer (24) des Schäumwerkzeugs angeordnet ist; und
• Einbringen von geschäumtem Kunststoff (25) in die Schäumkammer (24) des Schäumwerkszeugs (20),
wobei die Sperrschicht (11) in einer Form hergestellt wird, welche zumindest im Wesentlichen der Außenkontur des zu fertigenden Formkörpers entspricht.

2. Verfahren nach Anspruch 1,
wobei die Sperrschicht (11) aus einer thermisch tiefgezogenen Folie gebildet wird.

3. Verfahren nach Anspruch 1 oder 2,
wobei die Sperrschicht (11) aus Polyolefin (PO), Polypropylen (PP), Polyester (PET) oder Polystyrol (PS), gebildet ist.

4. Verfahren nach einem der Ansprüche 1 bis 3,
wobei die Sperrschicht (11) zunächst in einer ebenen Struktur ausgebildet wird, und wobei nach dem Aufbringen und Fixieren des Bezugsmaterials auf der selbsttragenden Sperrschicht (11) der so gebildete Vorverbund (17) aus der Sperrschicht (11) und dem Bezugsmaterial (14-1, 14-2) derart verformt wird, dass der Vorverbund dann eine Form aufweist, welche zumindest im Wesentlichen der Außenkontur des zu fertigenden Formkörpers entspricht.

5. Verfahren nach einem der Ansprüche 1 bis 4,
wobei die Sperrschicht (11) aus einer thermisch tiefgezogenen Folie gebildet wird, und wobei die Sperrschicht (11) derart selbstklebend ausgebildet wird, dass sich die Sperrschicht (11) während des Tiefziehprozesses mit dem Bezugsmaterial verbindet.

6. Verfahren nach Anspruch einem der Ansprüche 1 bis 4,
wobei die Fixierung zwischen der Sperrschicht (11) und dem Bezugsmaterial (14-1, 14-2) durch mindestens eine Klebeschicht (12) erzeugt wird.

7. Verfahren nach Anspruch 6,
wobei die eine selbsttragende Sperrschicht (11), vor der Erzeugung des Vorverbunds (17), zumindest bereichsweise mit der Klebeschicht (12) beschichtet wird.

8. Verfahren nach Anspruch 6 oder 7,
wobei als Klebeschicht (12) eine über eine vorbestimmbare Aktivierungstemperatur aktivierbare Klebeschicht (12) verwendet wird.

9. Verfahren nach Anspruch 8,
wobei aktivierbare Klebeschicht (12) eine Aktivierungstemperatur aufweist, welche einer Reaktionstemperatur des geschäumten Kunststoffs (25) entspricht.

10. Verfahren nach Anspruch einem der Ansprüche 1 bis 4,
wobei die Fixierung zwischen der Sperrschicht (11) und dem Bezugsmaterial (14-1, 14-2) durch Verschmelzung der Materialien der Sperrschicht (11) und des Bezugsmaterials (14-1, 14-2) erzeugt wird.

11. Verfahren nach einem der Ansprüche 1 bis 10,
wobei das Bezugsmaterial (14-1, 14-2) mindestens eine Verbindungs- und/oder Ziernaht (15) aufweist, und wobei die Fixierung des Bezugsmaterials an der Sperrschicht (11) vorzugsweise ausschließlich entlang der Verbindungs- bzw. Ziernaht (15) erfolgt.

12. Verfahren nach einem der Ansprüche 1 bis 11,
wobei als Bezugsmaterial (14-1, 14-2) natürliches Leder und/oder Kunstleder verwendet wird.

13. Verfahren nach einem der Ansprüche 1 bis 12,
wobei der geschäumte Kunststoff (25) aus einem COz getriebenen Polyurethan-Formschaum gebildet ist.

14. Mehrschichtiger Formkörper, insbesondere Innenausstattungsteil für Fahrzeuge, mit mindestens einem auf einem geschäumten Kunststoff (25) angebrachten Bezugsmaterial (14-1, 14-2), **dadurch gekennzeichnet, dass** der Formkörper nach dem Verfahren gemäß einem der Ansprüche 1 bis 13 hergestellt wurde.

## Claims

1. A method for producing multilayer molded bodies, in particularly interior fittings for vehicles, wherein the method comprises the following steps:
- producing a self-supporting barrier layer (11) which is impenetrable to the foamed plastic (25);
- applying and fixing at least part of the reverse side of a cover material to the self-supporting barrier layer (11) such that a pre-laminate (17) is formed between the barrier layer (11) and the cover material (14-1, 14-2);
- introducing the pre-laminate (17) of barrier layer (11) and covering material (14-1, 14-2) into a foaming mold (20) such that the barrier layer (11) is arranged between the cover material (14-1, 14-2) and a foam chamber (24) of the foaming mold; and
- introducing foamed plastic (25) into the foam chamber (24) of the foaming mold (20),
wherein the barrier layer (11) is produced in a shape which at least substantially corresponds to the outer contour of the molded body to be produced.

2. The method according to claim 1,
wherein the barrier layer (11) is formed of a thermally deep-drawn film.

3. The method according to claim 1 or 2,
wherein the barrier layer (11) is formed of polyolefin (PO), polypropylene (PP), polyester (PET) or polystyrene (PS).

4. The method according to any one of claims 1 to 3,
wherein the barrier layer (11) is initially formed in a planar structure, and wherein, after the application and fixing of the covering material on the self-supporting barrier layer (11), the pre-laminate (17) thus formed of the barrier layer (11) and the cover material (14-1, 14-2) is deformed in such a way that the pre-laminate then has a shape which at least substantially corresponds to the outer contour of the molded body to be produced.

5. The method according to any one of claims 1 to 4,
wherein the barrier layer (11) is formed of a thermally deep-drawn film, and wherein the barrier layer (11) is formed in a self-adhesive manner such that the barrier layer (11) joins with the cover material during the deep-drawing process.

6. The method according to any one of claims 1 to 4,
wherein the fixation between the barrier layer (11) and the cover material (14-1, 14-2) is produced by at least one adhesive layer (12).

7. The method according to claim 6,
wherein the one self-supporting barrier layer (11), prior to the production of the pre-laminate (17), is at least regionally coated with the adhesive layer (12).

8. The method according to claim 6 or 7,
wherein an adhesive layer (12) which is activatable above a predefinable activation temperature is used as the adhesive layer (12).

9. The method according to claim 8,
wherein the activatable adhesive layer (12) has an activation temperature corresponding to a reaction temperature of the foamed plastic (25).

10. The method according to any one of claims 1 to 4,
wherein the fixation between the barrier layer (11) and the cover material (14-1, 14-2) is produced by fusion of the materials of the barrier layer (11) and of the cover material (14-1, 14-2).

11. The method according to any one of claims 1 to 10,
wherein the cover material (14-1, 14-2) has at least one joining and/or decorative seam (15), and wherein the fixing of the cover material to the barrier layer (11) preferably takes place exclusively along the joining and/or decorative seam (15).

12. The method according to any one of claims 1 to 11,
wherein natural and/or imitation leather is used as the cover material (14-1, 14-2).

13. The method according to one of claims 1 to 12,
wherein the foamed plastic (25) is formed of a COz-driven polyurethane molded foam.

14. A multilayer molded body, in particular an interior fitting for vehicles, comprising at least one cover material (14-1, 14-2) fixed to a foamed plastic (25), **characterized in that** the molded body is produced pursuant to the method according to one of claims 1 to 13.

## Revendications

1. Procédé de fabrication de corps moulés multicouches, en particulier de pièces d'équipement intérieur pour véhicules, le procédé comprenant les étapes suivantes consistant à :
- réaliser une couche barrière autoportante (11) qui est impénétrable pour la matière plastique moussée (25) ;
- appliquer et fixer un matériau de revêtement avec au moins une zone partielle de la face arrière sur la couche barrière autoportante (11) de telle sorte qu'il se forme un pré-composite (17) constitué de la couche barrière (11) et du matériau de revêtement (14-1, 14-2) ;
- introduire le pré-composite (17) constitué de la couche barrière (11) et du matériau de revêtement (14-1, 14-2) dans un outil de moussage (20) de telle sorte que la couche barrière (11) soit disposée entre le matériau de revêtement (14-1, 14-2) et une chambre de moussage (24) de l'outil de moussage ; et
- introduire une matière plastique moussée (25) dans la chambre de moussage (24) de l'outil de moussage (20),
la couche barrière (11) étant réalisée en une forme qui correspond au moins sensiblement au contour extérieur du corps moulé à fabriquer.

2. Procédé selon la revendication 1,
dans lequel la couche barrière (11) est formée d'un film thermoformé.

3. Procédé selon la revendication 1 ou 2,
dans lequel la couche barrière (11) est formée de polyoléfine (PO), de polypropylène (PP), de polyester (PET) ou de polystyrène (PS).

4. Procédé selon l'une des revendications 1 à 3,
dans lequel la couche barrière (11) est d'abord réalisée en une structure plane, et, après application et fixation du matériau de revêtement sur la couche barrière autoportante (11), le pré-composite (17) ainsi formé à partir de la couche barrière (11) et du matériau de revêtement (14-1, 14-2) est déformé de telle sorte que le pré-composite présente alors une forme qui correspond au moins sensiblement au contour extérieur du corps moulé à fabriquer.

5. Procédé selon l'une des revendications 1 à 4,
dans lequel la couche barrière (11) est réalisée à partir d'un film thermoformé, et la couche barrière (11) est réalisée de manière autocollante de telle sorte que la couche barrière (11) se lie au matériau de revêtement pendant le processus de thermoformage.

6. Procédé selon l'une des revendications 1 à 4,
dans lequel la fixation entre la couche barrière (11) et le matériau de revêtement (14-1, 14-2) est générée par au moins une couche adhésive (12).

7. Procédé selon la revendication 6,
dans lequel ladite couche barrière autoportante (11) est revêtue au moins localement de la couche adhésive (12) avant la réalisation du pré-composite (17).

8. Procédé selon la revendication 6 ou 7,
dans lequel on utilise comme couche adhésive (12) une couche adhésive (12) apte à être activée par une température d'activation prédéfinissable.

9. Procédé selon la revendication 8,
dans lequel la couche adhésive activable (12) présente une température d'activation qui correspond à une température de réaction de la matière plastique moussée (25).

10. Procédé selon l'une des revendications 1 à 4,
dans lequel la fixation entre la couche barrière (11) et le matériau de revêtement (14-1, 14-2) est générée par fusion des matériaux de la couche barrière (11) et du matériau de revêtement (14-1, 14-2).

11. Procédé selon l'une des revendications 1 à 10,
dans lequel le matériau de revêtement (14-1, 14-2) présente au moins un joint de liaison et/ou de décoration (15), et la fixation du matériau de revêtement sur la couche barrière (11) s'effectue de préférence exclusivement le long du joint de liaison ou de décoration (15).

12. Procédé selon l'une des revendications 1 à 11,
dans lequel on utilise comme matériau de revêtement (14-1, 14-2) du cuir naturel et/ou du cuir synthétique.

13. Procédé selon l'une des revendications 1 à 12,
dans lequel la matière plastique moussée (25) est constituée d'une mousse de polyuréthane moulée expansée au CO2.

14. Corps moulé multicouche, en particulier pièce d'équipement intérieur pour véhicules, comprenant au moins un matériau de revêtement (14-1, 14-2) appliqué sur une matière plastique moussée (25),
**caractérisé en ce que** le corps moulé a été fabriqué par le procédé selon l'une des revendications 1 à 13.
